# EUROPEAN PATENT APPLICATION

(11) **EP 4 679 651 A1**
(43) Date of publication of application: **14.01.2026**
(21) Application number: 25166767.1
(22) Date of filing: 27.03.2025
(51) Int. Cl.: H02H 9/00, H02H 9/02, H02H 9/04

(54) **EMBEDDED IN-CORD ACTIVE INRUSH CURRENT LIMITER DEVICE FOR POWER SUPPLY UNIT**

(30) Priority: 17.04.2024 US 202463635265 P; 10.03.2025 US 202519075387
(71) Applicant: Vertiv Corporation, Westerville, OH 43082 (US)
(72) Inventor: Ferguson, Kevin R., Westerville, 43082 (US)
(74) Representative: Cousens, Nico

(57) **Abstract**

An apparatus (118) and method for limiting inrush current to an end device provides an alternating current (AC) to the end device (110) via a power cord (106, fig.1) including first and second current carrying conductors. A voltage sensor (206) enclosed by a housing attached to a power cord and connected to the conductors senses an input voltage. A current sensor (204) within the housing senses an inrush current via the first conductor. A microcontroller unit (MCU) within the housing receives the sensed input voltage and inrush current. Based on the sensed input voltage, the MCU determines a voltage drop across a negative temperature coefficient , NTC, thermistor (210) serially connected, with a parallel switching device 208, to the first conductor. When the sensed inrush current and/or the sensed input voltage reaches a threshold level, the MCU engages the NTC thermistor (210) to limit inrush current by opening the switching device (208).

## Description

### CROSS-REFERENCE TO RELATED APPLICATIONS

The present application claims the benefit under 35 U.S.C. § 119(e) of U.S. Provisional Patent Application Serial Number 63/635,265 filed April 17, 2024, titled EMBEDDED IN-CORD ACTIVE INRUSH CURRENT LIMITER DEVICE FOR POWER SUPPLY UNIT.

### TECHNICAL FIELD

The present disclosure is directed to power distribution devices for providing alternating current (AC) source to a power supply unit for conversion to direct current (DC) operating power for end devices.

### BACKGROUND

High-capacity power supply unit (PSU) loads may, under certain normal or abnormal operating modes or poor power quality conditions, e.g., voltage dips and/or drop-outs, create an inrush current of over 200 A. For example, a rack power distribution unit (PDU, rPDU) may incorporate a 16 A TV-8 bistable power relay rated for 117 A inrush current, but which may maintain survivability and remain fit for return to service up to 300 A of inrush current. Beyond 300 A, the relay may fail due to terminal blowout: the metal of the movable contact may melt, rupturing the case and ejecting molten metal within the chassis vicinity, leading to potential secondary arc flash and damage to nearby components. Relay failure has also been observed to occur in the field during steady state operations and more frequently where institutions operate from unconditioned utility power. Further, under supplemental electromagnetic compatibility (EMC) certification testing conditions (e.g., IEC 61000-4-11 immunity tests for voltage dips, short interruptions, and voltage variations), surges in inrush current have been observed to affect the regulation and stability of AC source instrumentation, causing said instrumentation to operate in lower-voltage current-limit mode which may in turn cause correct but unexpected rPDU behavior. Further, the size and cost constraints associated with rPDU devices preclude the addition of active overcurrent protection devices to every rPDU outlet.

### SUMMARY

In a first aspect, an embedded in-cord inrush current limiter device is disclosed. In embodiments, the device includes a housing of flame-retardant plastic embedded within a power supply cord extending between first and second connectors at opposite ends, the first connector pluggable into a power distribution unit (PDU) and the second pluggable into an end device for which the PDU provides alternating current (AC) operating power via current carrying conductors. Within the housing are a switch and negative temperature coefficient (NTC) thermistor serially connected to a first conductor, the switch having closed and open states. Also within the housing are voltage sensors coupled to the first and a second conductor, for sensing input voltage relative to the NTC thermistor. Additionally, a current sensor coupled to the first conductor senses inrush current. The sensed input voltage and inrush current are provided to a microcontroller unit (MCU) which captures voltage waveforms based on the sensed input voltage and current waveforms based on the sensed inrush current. When either or both of the inrush current or input voltage reaches or exceeds a threshold, the MCU engages the NTC thermistor to limit inrush current by opening the switch. Subsequent to this engagement, the MCU can shunt the NTC thermistor to cool down by closing the switch. A reset button provides for arming or resetting the current limiter device.

In some embodiments, the MCU measures a peak inrush current based on the current waveform.

In some embodiments, the MCU detects an operational state of the NTC thermistor based on the voltage or current waveforms.

In some embodiments, the operational state includes a resistance level or a power dissipation of the NTC thermistor.

In some embodiments, the voltage sensors include line-side and load-side voltages on either side of the NTC thermistor.

In some embodiments, the MCU determines a voltage drop based on the sensed line-side and/or load-side voltages (or, e.g., line-side voltage information received from an offline AC/DC converter), and engages the NTC thermistor based at least on the voltage drop.

In some embodiments, the current sensor includes a toroidal current transformer.

In some embodiments, the current sensor includes a proximity current sensor.

In some embodiments, the switch includes a bistable power relay.

In some embodiments, the switch includes a silicon-controlled rectifier (SCR), an insulated bipolar gate transistor (IGBT), or other like solid-state switching device.

In some embodiments, the limiter device includes visual indicators for reporting a device status and/or a condition of the PDU.

In some embodiments, the visual indicators include light emitting diodes (LED).

In some embodiments, the PDU condition includes an undervoltage severity, an overvoltage severity, or an overcurrent severity.

In some embodiments, the reset button is capable of resetting the visual indicator/s.

In a further aspect, a method for limiting inrush current to an end device is disclosed. In embodiments, the method includes providing, via a power cord including first and second current carrying conductors, alternating current (AC) operating power to the end device. The method includes sensing, via voltage sensors enclosed within an in-cord housing, an input voltage. The method includes sensing, via current sensors enclosed by the housing, an inrush current. The method includes receiving, via a microcontroller unit (MCU) enclosed by the housing, the sensed input voltage and inrush current. The method includes, when either or both of the input voltage or inrush current reach a threshold level, engaging an NTC thermistor within the housing to limit the inrush current by opening a switch also enclosed within the housing, the NTC thermistor and switch serially connected to the first conductor.

In some embodiments, receiving the sensed input voltage includes capturing a voltage waveform, and receiving the sensed inrush current includes capturing a current waveform.

In some embodiments, the method includes measuring a peak inrush current.

In some embodiments, the method further includes detecting an operational state of the NTC thermistor (e.g., resistance, power dissipation) based on the voltage and/or current waveforms.

In some embodiments, the method includes, subsequent to engaging the NTC thermistor, shunting the NTC thermistor for a cool-down interval by closing the switch.

In some embodiments, the method includes sensing, via line-side and/or load-side voltage sensors on either side of the NTC thermistor, line-side and load-side input voltages (or, in the alternative, receiving line-side input voltage information from an offline AC/DC converter). The method further includes determining a voltage drop across the NTC thermistor based on the line-side and load-side input voltages. The method further includes engaging the NTC thermistor based on at least the determined voltage drop.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are example and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1 is an environmental diagram of a power supply system via which an alternating current (AC) power source is converted to direct current (DC) operating power at the end device by their respective power supply units (PSU), incorporating an embedded in-cord inrush current limiter device according to example embodiments of the inventive concepts disclosed herein;
FIG. 2 is a schematic diagram of the embedded in-cord inrush current limiter device of FIG. 1;
and FIGS. 3A, 3B, 3C, and 3D are process flow diagrams of a method for limiting inrush current to an end device according to the inventive concepts disclosed herein.

### DETAILED DESCRIPTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination or sub-combination of two or more such features, along with any other features which may not necessarily be expressly described or inherently present in the instant disclosure.

Broadly speaking, embodiments of the inventive concepts disclosed herein are directed to a compact embedded in-cord active inrush current limiter device, incorporating overcurrent protection circuitry embedded into the rPDU power cord and operating independently of the rPDU proper. Under suboptimal power quality conditions associated with surges in inrush current, the device senses undervoltage or overcurrent conditions and engages to actively mitigate excess inrush current when these conditions are detected, preventing damage to the rPDU or proximate components (or to any end devices plugged into, and powered via, the rPDU) and averting adverse effects on AC source instrumentation.

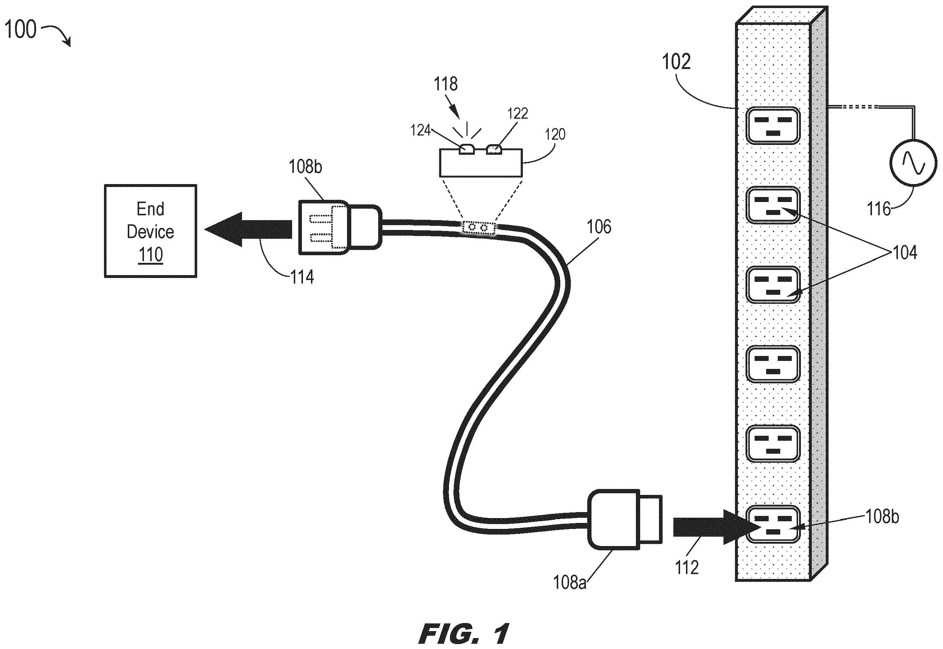

Referring to FIG. 1, a power distribution system 100 is shown. The power distribution system 100 may include a power distribution unit 102 (PDU, also rack PDU (rPDU)) having a set of outlets 104, a power cord 106 extending between connectors 108a and 108b, and one or more end devices 110.

In embodiments, the power cord 106 may connect the end devices 110 (e.g., power supply units (PSU), network switches, or any other appropriate powered device) to the PDU 102 via connectors 108a, 108b. For example, the power cord 106 may be a C20-to-C19 power cord having at either terminus a "female" (e.g., C19) connector 108a capable of plugging into (112) the PDU 102 and a "male" (e.g., C20) plug capable of plugging into (114) an end device 110. Further, the power cord 106 may include and encapsulate current carrying conductors, e.g., a line conductor for carrying AC source power from the PDU 102 to the end device 110, a neutral conductor for returning current to the PDU, and a ground conductor (e.g., protective earth (PE), which may carry current only under fault conditions. Alternatively, the power cord 106 may include a line/line pair of current carrying conductors, rather than a line/neutral pair.

In embodiments, the end device 110 may convert AC source power (e.g., from an AC source 116) from the PDU 102 into DC operating power of a desired current and/or voltage (e.g., high-current, low-voltage; secondary voltage) accessible to a server, information technology (IT) device, or other end device 110 plugged into an outlet 104 of the PDU via the power cord 106. For example, the outlets 104 may include C19 outlets as described above (or, e.g., C13 outlets or a combination of C13 and C19 outlets, a combination of 20 A outlets (e.g., C19) and 30 A outlets (e.g., Anderson Saf-D-Grid, BizLink), or any other appropriate combination of outlets.

In embodiments, the embedded in-cord active inrush current (IC) limiter device 118 may be incorporated into a housing 120, e.g., a compact UL 94 colored opaque or translucent flame-retardant plastic enclosure embedded into the power cord 106. For example, the housing 120 may further include a reset switch or button 122 and/or one or more visual indicators 124 as described below.

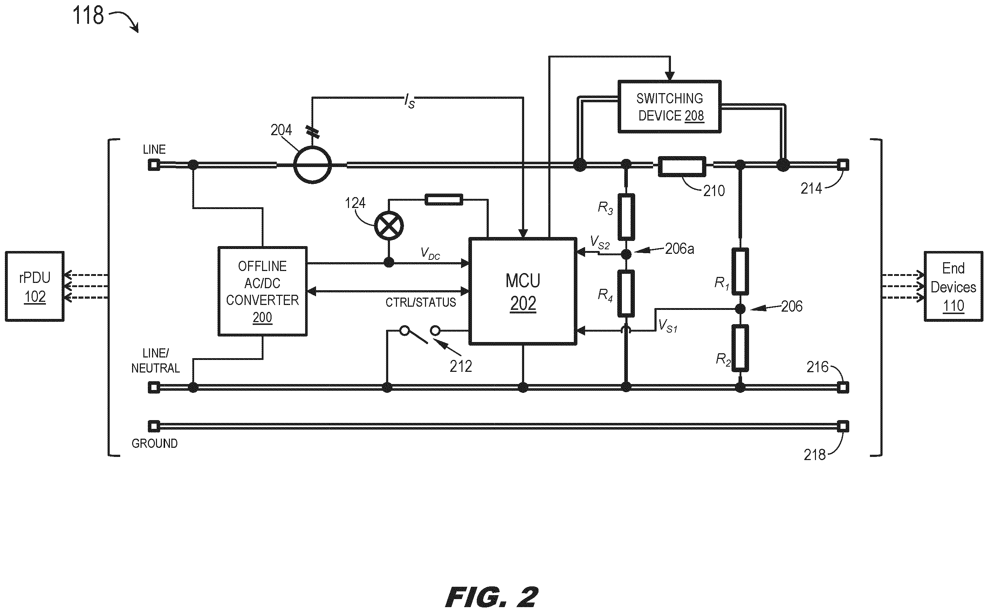

Referring now to FIG. 2, the embedded in-cord active inrush current (IC) limiter device 118 is shown. In embodiments, the IC limiter device 118 may be enclosed by, or otherwise disposed within, the housing (120, FIG. 1) embedded within the power cord (106, FIG. 1) connecting the PDU 102 and the end device 110, and proximate to an offline AC/DC converter 200. For example, components of the IC limiter device 118 may include a microcontroller unit 202 (MCU), current sensor 204, voltage sensor 206, switching device 208, and negative temperature coefficient (NTC) thermistor 210, and local reset switch 212.

In embodiments, as the housing 120 is embedded within the power cord (106, FIG. 1), various components of the IC limiter device 118 may be connected to one or more of the current carrying conductors 214, 216 within the power cord (e.g., line conductor 214 and neutral conductor 216 (which, in some embodiments, may also be a current-carrying line conductor), along with the protective earth (PE) ground conductor 218). For example, the MCU 202 may incorporate one or more peripherals and may manage data acquisition, measurement, power control, and human/machine interface (HMI) functionalities for the IC limiter device 118. Further, the MCU 202 may manage control, status, and DC output voltage (***V_{DC}***) reported by the offline AC/DC converter 200. For example, the MCU 202 may draw operating power from the offline AC/DC converter 200, and may alter a switching frequency of the offline AC/DC converter, e.g., based on a magnitude of the AC input voltage. Further, the MCU 202 may be reset by a control/status signal sent by the offline AC/DC converter 200.

In embodiments, the current sensor 204 may include a proximity current sensor, toroidal current transformer, or any other like component or components capable of sensing inrush current ***I_{S}*** through the line conductor 214. For example, the current sensor 204 may report sensed inrush current to the MCU 202.

In embodiments, the voltage sensor 206 may include a load-side voltage divider circuit (e.g., comprising resistors ***R₁**,* ***R₂*)** or other like voltage sensing circuit configured for sensing load-side input voltage ***V_{S1}*** (e.g., supply voltage) and reporting the sensed load-side input voltage to the MCU 202. Further, the MCU 202 may detect and report an operational state of the NTC thermistor 210 based on the sensed current and input voltage. For example, the MCU 202 may receive load-side input voltage ***V_{S1}*** sensed by the voltage sensor 206 and line-side input voltage ***V_{S2}*** via control/status updates from the offline AC/DC converter 200. In embodiments, based on the received load-side and line-side input voltages, the MCU 202 may determine a voltage drop ***V_{D} =* Δ(*V_{S1}, V_{S2}*)** across the NTC thermistor 210. Further, given the voltage drop ***V_{D}*** across the NTC thermistor 210 and the sensed inrush current Is, the MCU may determine a power dissipation (e.g., ***Pw = V_{D} x I_{S}*)** and/or resistance (e.g., ***R* = *V_{D}* / *I_{S}*)** of the NTC thermistor. In embodiments, based on the power dissipation and resistance of the NTC thermistor 210, the MCU 202 may determine whether or not a shunted NTC thermistor has sufficiently cooled down as to recover its nominal initial resistance (and may thereby be effectively re-engaged by the MCU for inrush current limitation). In some embodiments, the IC limiter device 118 may include a line-side voltage sensor 206a (e.g., comprising resistors ***R₃, R₄*)** for sensing (and reporting to the MCU 202) line-side input voltage ***V_{S2}*.**

In embodiments, the MCU 202 may capture high-resolution waveforms based on the sensed inrush current ***I_{C}*** and input voltage/s ***V_{S1}, V_{S2}*** reported by the current and voltage sensors 204, 206. For example, with respect to either sensed inrush current or sensed input voltage/s, the waveforms may comprise a time series of ordered samples collected at regular intervals. For example, voltage-based waveform data (e.g., based on samples of the sensed input voltages ***V_{S1}, V_{S2}*** and/or the voltage drop) may be further analyzed (either by the MCU 202 or offline) to detect, e.g., voltage transients, dips, swells, interruptions, harmonics, and/or other power quality conditions useful to the MCU 202 in managing the relay/contact state of the NTC thermistor 210. Similarly, waveform data based on sensed inrush current may provide peak current (e.g., up to 300 A), root mean square (RMS), crest factors, and additional ancillary data useful for management of the NTC thermistor 210 by the MCU 202.

In embodiments, the switching device 208 may include a bistable power relay (e.g., a 16 A, TV-8 rated, single pole/single throw (SPST) Form A relay, latching relay) and NTC thermistor 210 (e.g., 5-ohm (5 Ω) NTC thermistor) may be connected in series to the line conductor 214. Alternatively, the switching device 208 may include a silicon-controlled rectifier (SCR), insulated gate bipolar transistor (IGBT), or any other appropriate solid-state switching device (if faster switching times are desired or needed, e.g., microseconds as opposed to milliseconds (in the case of the bistable power relay)).

In embodiments, the switching device 208 may have an open state and a closed state. For example, under normal power quality conditions, the MCU 202 may maintain the switching device 208 in a closed state, such that steady state current may pass through the switching device rather than the NTC thermistor 210 (e.g., due to its relatively higher resistance).

In embodiments, under certain conditions (e.g., when conditions are detected or may exist that may result in surges in inrush current), the MCU 202 may engage the NTC thermistor 210 to limit inrush current through the line conductor 214. For example, when peak inrush current Is as sensed by the current sensor 204 and/or measured by the MCU 202 reaches an overcurrent threshold, or when input voltage ***V_{S1}, V_{S2}*** sensed by the voltage sensor/s 206, 206a reaches an undervoltage threshold (e.g., < 230 V_{PK}), the MCU 202 may open the switching device 208 to engage the NTC thermistor 210 in-circuit. Further, as inrush current causes the NTC thermistor 210 to generate heat, its resistance will decrease as the inrush current surges through it. In embodiments, the MCU 202 may signal the switching device 208 to open and engage the NTC thermistor 210 for inrush current limiting by opening the switching device 208 under other conditions, e.g., during cold starts or startups, during end device disconnection, during steady state operations, when power loss may be imminent (e.g., if an upstream circuit breaker has opened, if the AC source (116, FIG. 1) has been disconnected).

In embodiments, when the NTC thermistor 210 has been engaged, the MCU 202 may signal the switching device 208 to close and shunt the thermistor, disengaging the thermistor and allowing the thermistor to cool down in a non-functioning state to a nominal temperature and resistance, e.g., in preparation for the next engagement. For example, after a predetermined number of line cycles, the MCU 202 may close the switching device 208 for at least a predetermined cool-down interval (e.g., 30 seconds).

In embodiments, the IC limiter device 118 may include one or more visual indicators 124. For example, each visual indicator 124 may be an RGB light emitting diode (LED) capable of conveying a status of the IC limiter device 118 and/or an operating condition associated with the AC provided by the AC source 116. For example, the visual indicator/s 124 may indicate a severity or magnitude of an undervoltage or overvoltage, a severity or magnitude of an overcurrent or undercurrent, or other sensed or determined power quality conditions. In embodiments, the visual indicators 124 may signal power quality conditions either on a discrete or binary basis (e.g., on/off) or, e.g., via color gradient, luminous intensity, or combinations thereof.

In some embodiments, the IC limiter device 118 may include a local reset switch 212 configured for engagement by the button (122, FIG. 1) set into the housing (120, FIG. 1). For example, engagement of the button 122 may allow for local reset or arming of the IC limiter device 118. In some embodiments, an inrush current surge event (e.g., an engagement of the NTC thermistor 210) may activate the visual indicator/s 124 as an alert, after which the visual indicator/s may remain lit for an indefinite basis. By engaging the button 122, a user may reset the visual indicator/s 124 to a default or unlit state.

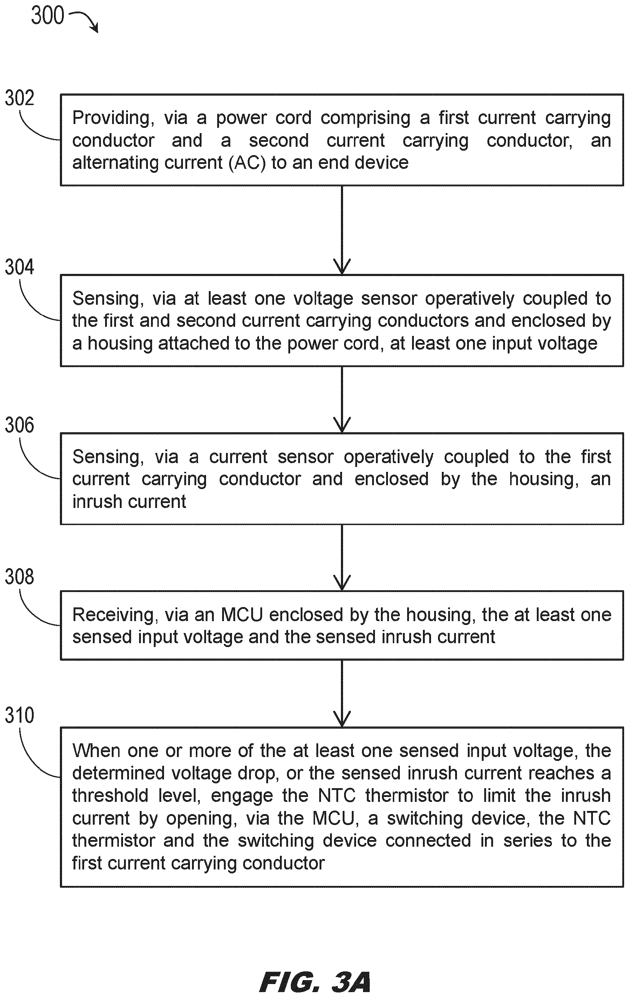

Referring now to FIG. 3A, the method 300 may be implemented by the IC limiter device 118 and may include the following steps.

At a step 302, an alternating current (AC) (e.g., from an AC power source) is provided (e.g., via a power cord connecting a power distribution unit (PDU, rack PDU (rPDU)) to a power supply unit (PSU) or like end device for conversion to direct current (DC) operating power by the end device (e.g., a powered device plugged into an outlet of the rPDU).

At a step 304, a voltage sensor of an IC limiter device embedded within the power cord senses an input voltage associated with the AC (e.g., between the current carrying conductors (e.g., line/neutral, line/line) within the power cord).

At a step 306, a current sensor of the IC limiter device senses an inrush current on the line conductor.

At a step 308, a microcontroller unit (MCU) of the IC limiter device receives the sensed input voltage/s and inrush current. For example, the MCU samples or captures high resolution waveforms of the sensed input voltage and inrush current, and measures peak inrush current (as well as other power quality conditions), based on the captured voltage and current waveforms.

At a step 310, when the sensed input voltage/s and/or the sensed inrush current reach a threshold level (e.g., undervoltage threshold, overcurrent threshold), the MTC engages an NTC thermistor of the IC current limiter device by opening the contacts of a switching device (e.g., bistable power relay, silicon-controlled rectifier (SCR), insulated-gate bipolar transistor (IGBT), or other appropriate solid-state switch) of the IC current limiter device, the NCT thermistor connected in series with the switching device and configured to reduce the inrush current. In some embodiments, the NTC thermistor may be engaged based on other power quality conditions derived by the MCU (e.g., as determined or derived based on voltage or current waveforms).

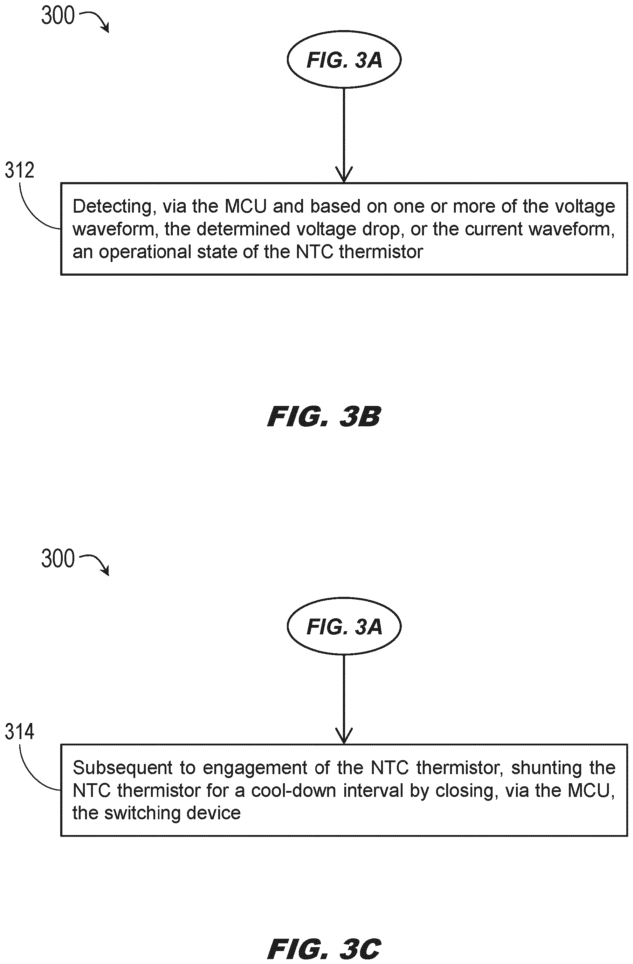

Referring also to FIG. 3B, the method 300 may include an additional step 312. At the step 312, the MCU detects additional operational states of the NTC thermistor based on the voltage-based and current-based waveform data. For example, based on the voltage waveform, the MCU determines one or more of: voltage transients, dips, swells, interruptions, harmonics, and/or other power quality conditions useful to the MCU in managing the relay/contact state of the NTC thermistor. Similarly, based on the current waveform data, the MCU determines peak current, RMS, crest factors, and/or other current-based information.

Referring also to FIG. 3C, the method 300 may include an additional step 314. At the step 314, subsequent to engagement of the NTC thermistor, the MCU shunts the thermistor for a predetermined cool-down interval (e.g., to allow the thermistor to cool down in a non-functioning state for future re-engagement) by closing the contacts of the switching device. For example, the MCU may shunt the NTC thermistor after a predetermined number of engagement cycles, allowing the NTC thermistor to return to its nominal temperature and initial resistance.

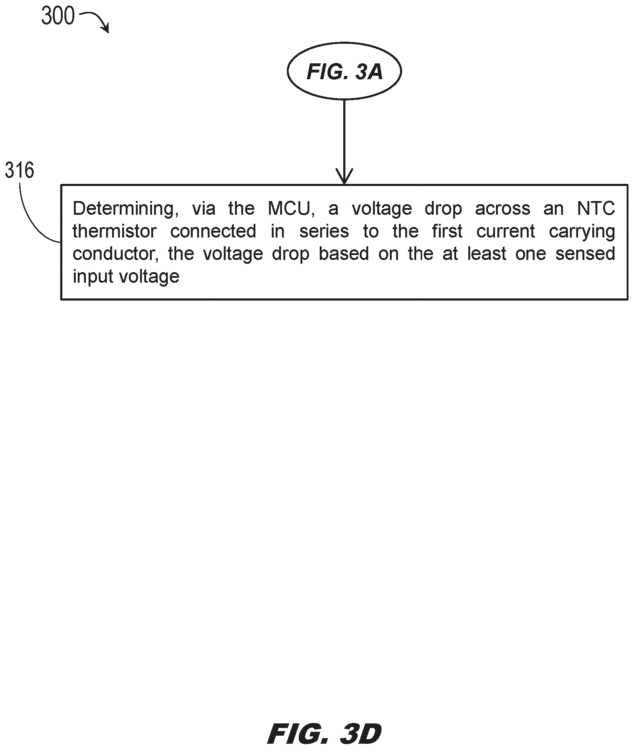

Referring also to FIG. 3D, the method 300 may include an additional step 316. At the step 316, the MCU determines a voltage drop across an NTC thermistor connected in series to the line conductor. For example, the MCU may receive line-side and load-side voltages from line-side and load-side voltage sensors respectively on either side of the thermistor, or the MCU may receive line-side voltage from the offline AC/DC converter.

It is contemplated that embodiments of the inventive concepts disclosed herein may have numerous advantages. For example, as noted above, the end devices may be provided with compact inrush current limiter functionality without significantly affecting cost, space, or weight factors, protecting the end devices, power cord, and other components (e.g., the AC source, rPDUs) from current surges, equipment damage, and/or anomalous behavior).

Those having skill in the art will recognize that the state of the art has progressed to the point where there is little distinction left between hardware and software implementations of aspects of systems; the use of hardware or software is generally (but not always, in that in certain contexts the choice between hardware and software can become significant) a design choice representing cost vs. efficiency tradeoffs. Those having skill in the art will appreciate that there are various vehicles by which processes and/or systems and/or other technologies described herein can be implemented (e.g., hardware, software, and/or firmware), and that the preferred vehicle will vary with the context in which the processes and/or systems and/or other technologies are deployed. For example, if an implementer determines that speed and accuracy are paramount, the implementer may opt for a mainly hardware and/or firmware vehicle; alternatively, if flexibility is paramount, the implementer may opt for a mainly software implementation; or, yet again alternatively, the implementer may opt for some combination of hardware, software, and/or firmware. Hence, there are several possible vehicles by which the processes and/or devices and/or other technologies described herein may be implemented, none of which is inherently superior to the other in that any vehicle to be utilized is a choice dependent upon the context in which the vehicle will be deployed and the specific concerns (e.g., speed, flexibility, or predictability) of the implementer, any of which may vary. Those skilled in the art will recognize that optical aspects of implementations will typically employ optically-oriented hardware, software, and or firmware.

The foregoing detailed description has set forth various embodiments of the devices and/or processes via the use of block diagrams, flowcharts, and/or examples. Insofar as such block diagrams, flowcharts, and/or examples contain one or more functions and/or operations, it will be understood by those within the art that each function and/or operation within such block diagrams, flowcharts, or examples can be implemented, individually and/or collectively, by a wide range of hardware, software, firmware, or virtually any combination thereof. In one embodiment, several portions of the subject matter described herein may be implemented via Application Specific Integrated Circuits (ASICs), Field Programmable Gate Arrays (FPGAs), digital signal processors (DSPs), or other integrated formats. However, those skilled in the art will recognize that some aspects of the embodiments disclosed herein, in whole or in part, can be equivalently implemented in integrated circuits, as one or more computer programs running on one or more computers (e.g., as one or more programs running on one or more computer systems), as one or more programs running on one or more processors (e.g., as one or more programs running on one or more microprocessors), as firmware, or as virtually any combination thereof, and that designing the circuitry and/or writing the code for the software and/or firmware would be well within the skill of one of skill in the art in light of this disclosure. In addition, those skilled in the art will appreciate that the mechanisms of the subject matter described herein are capable of being distributed as a program product in a variety of forms, and that an illustrative embodiment of the subject matter described herein applies regardless of the particular type of signal bearing medium used to actually carry out the distribution. Examples of a signal bearing medium include, but are not limited to, the following: a recordable type medium such as a floppy disk, a hard disk drive, a Compact Disc (CD), a Digital Video Disk (DVD), a digital tape, a computer memory, etc.; and a transmission type medium such as a digital and/or an analog communication medium (e.g., a fiber optic cable, a waveguide, a wired communications link, a wireless communication link, etc.).

In a general sense, those skilled in the art will recognize that the various aspects described herein which can be implemented, individually and/or collectively, by a wide range of hardware, software, firmware, or any combination thereof can be viewed as being composed of various types of "electrical circuitry." Consequently, as used herein "electrical circuitry" includes, but is not limited to, electrical circuitry having at least one discrete electrical circuit, electrical circuitry having at least one integrated circuit, electrical circuitry having at least one application specific integrated circuit, electrical circuitry forming a general purpose computing device configured by a computer program (e.g., a general purpose computer configured by a computer program which at least partially carries out processes and/or devices described herein, or a microprocessor configured by a computer program which at least partially carries out processes and/or devices described herein), electrical circuitry forming a memory device (e.g., forms of random access memory), and/or electrical circuitry forming a communications device (e.g., a modem, communications switch, or optical-electrical equipment). Those having skill in the art will recognize that the subject matter described herein may be implemented in an analog or digital fashion or some combination thereof.

Those having skill in the art will recognize that it is common within the art to describe devices and/or processes in the fashion set forth herein, and thereafter use engineering practices to integrate such described devices and/or processes into data processing systems. That is, at least a portion of the devices and/or processes described herein can be integrated into a data processing system via a reasonable amount of experimentation. Those having skill in the art will recognize that a typical data processing system generally includes one or more of a system unit housing, a video display device, a memory such as volatile and non-volatile memory, processors such as microprocessors and digital signal processors, computational entities such as operating systems, drivers, graphical user interfaces, and applications programs, one or more interaction devices, such as a touch pad or screen, and/or control systems including feedback loops and control motors (e.g., feedback for sensing position and/or velocity; control motors for moving and/or adjusting components and/or quantities). A typical data processing system may be implemented utilizing any suitable commercially available components, such as those typically found in data computing/communication and/or network computing/communication systems.

The herein described subject matter sometimes illustrates different components contained within, or connected with, different other components. It is to be understood that such depicted architectures are merely exemplary, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

While particular aspects of the present subject matter described herein have been shown and described, it will be apparent to those skilled in the art that, based upon the teachings herein, changes and modifications may be made without departing from the subject matter described herein and its broader aspects and, therefore, the appended claims are to encompass within their scope all such changes and modifications as are within the true spirit and scope of the subject matter described herein. Furthermore, it is to be understood that the invention is defined by the appended claims.

## Claims

1. An inrush current limiter device, comprising:
a housing fashioned of a flame-retardant plastic, the housing embedded within a power supply cord between a first connector and a second connector,
the first connector couplable to a power distribution unit "PDU" capable of providing an alternating current "AC" to an end device,
the second connector couplable to the end device,
the power supply cord comprising at least one first current carrying conductor and at least one second current carrying conductor;
and
the housing configured to at least partially enclose:
at least one switching device and a negative temperature coefficient "NTC" thermistor, wherein the switching device and the NTC thermistor are connected in series to the first current carrying conductor, and wherein the switching device has an open state and a closed state;
at least one voltage sensor operatively coupled to the first and second current carrying conductors, each voltage sensor configured to sense an input voltage relative to the NTC thermistor;
a current sensor operatively coupled to the at least one first current carrying conductor and configured to sense an inrush current;
a microcontroller unit "MCU" operatively coupled to the at least one voltage sensor, to the current sensor, and to the switching device, the MCU configured to:
receive the at least one sensed input voltage and sensed inrush current;
capture a voltage waveform based on the at least one sensed input voltage;
capture a current waveform based on the sensed inrush current;
when one or more of the at least one sensed input voltage or the sensed inrush current reaches a threshold level, engage the NTC thermistor for limiting the inrush current by opening the switching device;
and
shunt the NTC thermistor for at least one cool-down interval subsequent to engagement of the NTC thermistor by closing the switching device;
and
at least one reset button operatively coupled to the MCU, the at least one button configured for at least one of arming the current limiter device or resetting the current limiter device when engaged by a user.

2. The inrush current limiter device of Claim 1, wherein the MCU is configured to:
measure a peak inrush current based on the current waveform.

3. The inrush current limiter device of Claim 1 or 2, wherein the MCU is configured to detect an operational state of the NTC thermistor based on one or more of the voltage waveform or the current waveform,
and optionally wherein the operational state of the NTC thermistor includes at least one of:
a resistance of the NTC thermistor;
or
a power dissipation of the NTC thermistor.

4. The inrush current limiter device of Claim 3, wherein the at least one voltage sensor includes at least one of:
a line-side voltage sensor configured to sense a line-side voltage;
or
a load-side voltage sensor configured to sense a load-side voltage, and optionally wherein the MCU is configured to:
determine a voltage drop across the NTC thermistor based on at least one of the sensed line-side or load-side voltage;
and
engage the NTC thermistor based at least on the determined voltage drop.

5. The inrush current limiter device of any preceding Claim, wherein the at least one current sensor includes at least one toroidal current transformer and/or at least one proximity current sensor.

6. The inrush current limiter device of any preceding Claim, wherein the at least one switching device includes a bistable power relay and/or at least one solid-state switch selected from a group including a silicon-controlled rectifier "SCR" and an insulated gate bipolar transistor "IGBT".

7. The inrush current limiter device of any preceding Claim, further comprising:
at least one visual indicator operatively coupled to the MCU, the at least one visual indicator configured to report at least one of:
a status of the current limiter device;
or
a condition associated with the PDU,
and optionally wherein the at least one visual indicator includes at least one light emitting diode "LED".

8. The inrush current limiter device of Claim 7, wherein the condition includes at least one of:
a severity of an undervoltage associated with the at least one sensed input voltage;
a severity of an overvoltage associated with the at least one sensed input voltage;
or
a severity of an overcurrent associated with the sensed inrush current.

9. The inrush current limiter device of Claim 7 or 8, wherein the reset button is configured to reset the at least one visual indicator.

10. A method for limiting inrush current to an end device, the method comprising:
providing, via a power cord comprising a first current carrying conductor and a second current carrying conductor, an alternating current to an end device;
sensing, via at least one voltage sensor operatively coupled to the first and second current carrying conductors and enclosed by a housing attached to the power cord, at least one input voltage;
sensing, via a current sensor operatively coupled to the first current carrying conductor and enclosed by the housing, an inrush current;
receiving, via a microcontroller unit "MCU" enclosed by the housing, the at least one sensed input voltage and the sensed inrush current;
and
when one or more of the at least one sensed input voltage or the sensed inrush current reaches a threshold level, engaging an NTC thermistor to limit the inrush current by opening, via the MCU, a switching device, the NTC thermistor and the switching device connected in series to the first current carrying conductor.

11. The method of Claim 10, wherein receiving, via a microcontroller unit "MCU" enclosed by the housing, the sensed input voltage and inrush current includes:
capturing, via the MCU, a voltage waveform based on the at least one sensed input voltage;
and
capturing, via the MCU, a current waveform based on the sensed inrush current.

12. The method of Claim 11, wherein capturing, via the MCU, a current waveform based on the sensed inrush current includes:
measuring, via the MCU, a peak inrush current based on the current waveform.

13. The method of Claim 11 or 12, further comprising:
detecting, via the MCU and based on one or more of the voltage waveform or the current waveform, at least one operational state of the NTC thermistor.

14. The method of any of Claims 10 to 13, further comprising:
subsequent to engagement of the NTC thermistor, shunting the NTC thermistor for a cool-down interval by closing, via the MCU, the switching device.

15. The method of any of Claims 10 to 14, wherein sensing, via at least one voltage sensor, at least one input voltage, includes at least one of sensing a line-side input voltage via a line-side voltage sensor or sensing a load-side input voltage via a load-side voltage sensor, further comprising:
determining, via the MCU, a voltage drop across the NTC thermistor based at least one of the line-side voltage or the load-side voltage;
and
wherein when one or more of the at least one sensed input voltage or the sensed inrush current reaches a threshold level, engaging the NTC thermistor to limit the inrush current includes:
engaging the NTC thermistor based at least on the determined voltage drop.
